# EUROPÄISCHE PATENTSCHRIFT

(11) **EP 2 756 290 B1**
(45) Veröffentlichungstag und Bekanntmachung des Hinweises auf die Patenterteilung: **30.09.2020**
(21) Anmeldenummer: 12745468.4
(22) Anmeldetag: 02.08.2012
(51) Int. Cl.: G01N 21/94

(54) **VORRICHTUNGEN ZUR SCHICHTDICKENBESTIMMUNG UND/ODER ZUR BESTIMMUNG EINES VERSCHMUTZUNGSGRADS EINES BANDES**
DEVICE FOR DETECTING THE LAYER THICKNESS AND/OR FOR DETECTING THE DEGREE OF CONTAMINATION OF A BAND
DISPOSITIF POUR LA DÉTECTION DE L'EPAISSEUR ET/OU POUR LA DÉTECTION DU DEGRÉ DE CONTAMINATION D'UNE BANDE

(30) Priorität: 15.09.2011 DE 102011082793
(43) Veröffentlichungstag der Anmeldung: 23.07.2014
(73) Patentinhaber: Carl Zeiss SMT GmbH, 73447 Oberkochen (DE)
(72) Erfinder: DÖRBAND, Bernd, 73434 Aalen (DE); LINDNER, Ralf, 89520 Heidenheim (DE)
(74) Vertreter: Kohler Schmid Möbus Patentanwälte
(86) Internationale Anmeldenummer: PCT/EP2012/065162
(87) Internationale Veröffentlichungsnummer: WO 2013/037563

(56) Entgegenhaltungen:
- EP-A2- 1 041 379
- US-A- 5 416 594
- US-A1- 2003 150 272

## Beschreibung

### Hintergrund der Erfindung

Die Erfindung betrifft eine Vorrichtung zur Bestimmung eines Verschmutzungsgrads einer durch Partikel verunreinigten Oberfläche eines Bandes.

Das Band bzw. der bandförmige Körper kann eine Mehrzahl von Schichten aufweisen und z.B. in der Halbleiterfertigung zur Herstellung von Bauteilen der organischen Elektronik, z.B. von organischen LEDs, oder von Solarzellen verwendet werden. Das Band ist bei diesen Anwendungen typischer Weise sehr dünn bzw. folienartig ausgebildet, d.h. das Band weist eine Dicke auf, die typischer Weise im Bereich von Mikrometern liegt.

Bauteile der organischen Elektronik, die z.B. aus einem bandförmigen Substrat gefertigt werden können, sind u.a. gegenüber Wasser und Sauerstoff empfindlich, weswegen eine Kapselung dieser Bauteile gegenüber der Umgebung erforderlich ist. Eine solche Kapselung könnte durch Glas oder mit Hilfe von Metallhauben erfolgen. Eine solche Kapselung kann jedoch für flexible, folienartige bzw. gedruckte elektronische Bauteile aufgrund ihrer Steifigkeit in der Regel nicht eingesetzt werden.

Zur Kapselung von flexiblen, aus bandförmigen Substraten mit einer Mehrzahl von Schichten hergestellten Bauteilen der organischen Elektronik können auf beiden Seiten der Bauteile dünne Barriereschichten (z.B. Multi-Layer aus Al₂O₃ bzw. ZrO₂) verwendet werden, die eine hinreichend niedrige Rate für den Durchtritt von Wasserdampf ("Water vapor transmission rate", WVTR) aufweisen, vgl. den Artikel "Al2O3 / ZrO2 Nanolaminates as Ultra-high Gas Diffusion Barriers - a Strategy for Reliable Encapsulation of Organic Electronics", von J. Meyer et al. Adv. Mater. 18, 1845 (2009) oder den Artikel "Thin Film Encapsulation of Top-Emitting OLEDs using Atomic Layer Deposition" von Thomas Riedl et al., in Solid-State and Organic Lighting, OSA Technical Digest (CD) (Optical Society of America, 2010), paper SOWB5.

Problematisch für die Herstellung von organischen elektronischen Bauteilen ist es jedoch, wenn an der Oberfläche, auf welche die Barriereschicht aufgebracht werden soll, Partikel vorhanden sind, da diese einerseits Mikrokanäle bilden können, die den Durchtritt von Wasser und/oder Sauerstoff aus der Umgebung durch die Barriereschicht ermöglichen und andererseits zu elektrischen Kurzschlüssen zwischen den Elektroden der organischen Bauteile führen können. Wasser und Sauerstoff sind insbesondere bei der Herstellung von organischen LEDs (OLEDs) kritisch, da diese zu einer Oxidation der Kathode führen können, welche bei OLEDs in der Regel aus einem unedlen Metall (z.B. Aluminium) bestehen, so dass lokal kein Strom mehr fließen kann (vgl. "White Paper on the Characterization of Thin-film Barrier Layer for Protection of Organic Light-Emitting Diodes" von Peter van de Weijer, Ton von Mol, 10. Sept. 2009, im Internet unter "www.fast2light.org" abrufbar). Dies kann zu schwarzen Punkten auf den Flächenstrahlern und ggf. zu einem Ausfall der OLED führen.

Die Prozessierung organischer Elektronik-Bauteile erfolgt in der Regel entweder in Reinräumen (z.B. mit zulässigen Partikelgrößen von maximal 0,5 µm), im Vakuum oder unter Schutzgasatmosphäre. Hierbei ist auf Partikelfreiheit der verwendeten Substrate bzw. Oberflächen zu achten. Insbesondere sollten keine Partikel im Bereich eines elektronischen Bauteils vorhanden sein, welche die Barriereschichten und die Elektroden, insbesondere die Kathode (bei einer OLED) durchstoßen. Kleinere Partikel, welche noch von der Barriereschicht bedeckt werden oder die nur in den inneren Schichten des Bauteils liegen, sind hingegen weniger kritisch. Die minimale kritische Partikelgröße liegt somit bei der Summe der kleinsten vorkommenden Schichtdicken von Barriereschicht und Elektrode, d.h. typischer Weise im Bereich von ca. 0,15 µm.

Die größten Partikel werden beim Herstellungsprozess von OLEDs beim Aufbringen der Anode (in der Regel aus Indium-Zinn-Oxid (Indium-Tin-Oxide, ITO)) durch einen Sputter-Prozess auf das Trägermaterial erzeugt, wobei die Partikelgrößen bei diesem Prozessschritt bei ca. 5 µm liegen können, vgl. "Impact of Particulate Contaminants on the Current Leakage Defect in OLED Devices" von Masaru Nagai, J. Electrochemical Soc. 154, J387 (2007). Diese Partikel lassen sich jedoch durch Reinigen gut entfernen. Verbleibende ITO-Partikel sind ggf. kritisch in Bezug auf Kurzschlüsse, jedoch in der Regel nicht für das Eindiffundieren von Wasser auf der Anodenseite, weil dort die Barriereschicht vor der ITO-Schicht aufgetragen und damit nicht von Partikeln durchstoßen wird, die erst durch das ITO-Sputtern entstehen. Kleinere Partikel, welche die leitfähigen Schichten (ITO-Anode, Shunting-Lines, leitfähige Polymerschichten) nicht durchstoßen, sind hingegen vergleichsweise unkritisch.

Es ist bekannt, die Oberflächen von Substraten mit Hilfe von Kameras zu beobachten. Die Auflösung (> 10 µm) dieser Kameras ist in der Regel jedoch nicht ausreichend, um kleine Partikelgrößen von weniger als 10 µm zu erkennen bzw. zu detektieren. Andere Lösungen, welche eine hohe Auflösung aufweisen, verwenden eine punktförmige Messung (vgl. "Light Scattering by Sub-half Micron Spherical Particles on Silicon and Oxidized Silicon Surfaces", Bawolek et al. Proc., ICCCS 485 (1992)) und sind daher typischer Weise zu langsam, um in-situ während eines Produktions-Prozesses die gesamte Oberfläche (scannend) zu untersuchen oder sind generell für die Prozessüberwachung ungeeignet (z.B. Lösungen mit Elektronen-Mikroskopen).

Neben der Bestimmung des Verschmutzungsgrads der Oberfläche eines bandförmigen Körpers durch Partikel bzw. der Bestimmung der Partikeldichte an der Oberfläche ist es für die Prozessierung des Bandes auch günstig, die Dicke bzw. die Brechzahl des Bandes bzw. einzelner Schichten des Bandes mit einer hohen Ortsauflösung zu bestimmen. Typischer Weise ist der grobe Schichtaufbau des Bandes hierbei bereits bekannt. Die Messgenauigkeit bei der Bestimmung der Schichtdicke (bei mittleren Dicken in der Größenordnung von ca. 100 nm) sollte aber möglichst hoch sein (typischer Weise < 2 nm) und die Messung sollte mit hoher Geschwindigkeit und einer Ortsauflösung (Raster) in einer Größenordnung von ca. 100 µm durchführbar sein, was von herkömmlichen Vorrichtungen zur Dickenmessung derzeit nicht geleistet werden kann.

### Aufgabe der Erfindung

Aufgabe der Erfindung ist es, eine Vorrichtung zur Bestimmung eines Verschmutzungsgrads einer durch Partikel verunreinigten Oberfläche eines Bandes bereitzustellen, welche insbesondere auch in Produktionsprozessen unmittelbar (in-situ bzw. in-line) eingesetzt werden kann.

### Gegenstand der Erfindung

Diese Aufgabe wird gelöst durch eine Vorrichtung zur Bestimmung eines Verschmutzungsgrads einer durch Partikel verunreinigten Oberfläche eines entlang einer Vorschubrichtung bewegten Bandes, umfassend: eine Lichterzeugungseinheit zur Erzeugung von Beleuchtungsstrahlung, eine der Lichterzeugungseinheit nachgeordnete Strahlformungseinheit zur Formung mindestens eines streifenförmigen Beleuchtungsstrahls zur Beleuchtung der bandförmigen Probe quer zur Vorschubrichtung, wobei die Strahlformungseinheit zur linienförmigen Beleuchtung des Bandes mit veränderlicher Linienbreite ausgebildet ist, eine Detektoreinheit zur Detektion von an der bandförmigen Probe gestreuter Beleuchtungsstrahlung, sowie eine Auswerteeinrichtung zur Bestimmung des Verschmutzungsgrads der Oberfläche anhand der detektierten Beleuchtungsstrahlung, wobei die Strahlformungseinheit mindestens eine Teleskopanordnung zur Strahlaufweitung der Beleuchtungsstrahlung in Vorschubrichtung aufweist, und wobei mindestens eines der optischen Elemente der Teleskopanordnung zur Einstellung der Linienbreite des streifenförmigen Beleuchtungsstrahls auf dem Band eine einstellbare Brennweite aufweist.

Erfindungsgemäß wird vorgeschlagen, eine (ortsfeste) Vorrichtung zur in-situ Überwachung des Verschmutzungsgrads bzw. zur Detektion von Partikeln an der Oberfläche eines Bands vorzusehen, während das Band relativ zur Vorrichtung entlang einer Vorschubrichtung bewegt wird. Zu diesem Zweck wird eine linienförmige Beleuchtung genutzt, die sich typischer Weise über die gesamte Breite des zu inspizierenden Bandes erstreckt, um den Verschmutzungsgrad über die gesamte Breite des Bandes zu bestimmen. Das Band kann hierbei beispielsweise mittels angetriebener Rollen in Vorschubrichtung bewegt werden. Durch die linienförmige Beleuchtung wird hierbei eine parallele Messung an einer Mehrzahl von Messorten quer zur Vorschubrichtung ermöglicht.

Im Sinne dieser Anmeldung wird unter dem Begriff "quer zur Vorschubrichtung" eine Ausrichtung des streifenförmigen Beleuchtungsstrahls verstanden, welche unter einem (von 0° verschiedenen) Winkel zur Vorschubrichtung verläuft, wobei der Winkel typischer Weise bei 90° liegt oder auch (z.B. um +/- 30°) von 90° abweichen kann. Unter einer "linienförmigen Beleuchtung" wird eine Beleuchtung verstanden, welche auf dem Band eine Linie erzeugt, deren Länge im Wesentlichen der Breite des Bandes entspricht und deren Linien-Breite im Bereich von Mikrometern oder Sub-Mikrometern liegt und beispielsweise eine Linien-Breite von ca. 50 µm bzw. von ca. 5 µm nicht überschreitet.

Durch die Bewegung der Probe in Vorschubrichtung in Kombination mit der linienförmigen Beleuchtung kann eine schnelle Inspektion bzw. Überwachung der Probe in Bezug auf kontaminierende Partikel erfolgen. Die Verwendung einer Streulichtmessung zur Partikel-Detektion ermöglicht es hierbei, den Verschmutzungsgrad auch für Partikel mit kleinen Partikelgrößen von weniger als ca. 10 µm, z.B. von 6 µm oder darunter zu messen. Eine oder mehrere Vorrichtungen zur Überwachung des Verschmutzungsgrades können hierbei an unterschiedlichen Stellen in einer Herstellungsanlage für ein organisches Bauteil, beispielsweise eine OLED, angebracht werden. Die Vorrichtungen erlauben es, eine ausreichende Partikelfreiheit der Oberfläche für einen nachfolgenden Herstellungsschritt, z.B. einem nachfolgenden Beschichtungsschritt, sicherzustellen.

Die Strahlformungseinheit ist zur linienförmigen Beleuchtung des Bandes mit in Vorschubrichtung veränderlicher Linienbreite ausgebildet. Von der Linienbreite des streifenförmigen Beleuchtungsstrahls hängt u.a. die (durchschnittliche) Partikelgröße der Partikel ab, die mit Hilfe der Streulichtmessung detektiert werden können. So können in Abhängigkeit von der Linienbreite z.B. in einem Bereich zwischen ca. 0,5 µm und 10 µm Partikel im Größenbereich von ca. 0,1 µm bis zu einem Größenbereich von ca. 6 µm separat erfasst werden.

In einer Ausführungsform weist die Strahlformungseinheit mindestens ein optisches Element mit einstellbarer Brennweite auf. Bei dem optischen Element kann es sich beispielsweise um eine Linse oder einen Spiegel handeln, die in der Form bzw. Geometrie veränderbar sind, so dass deren Brennweite einstellbar ist. Es versteht sich, dass zur Fokussierung auch ein Zoom-Objektiv mit veränderlicher Brennweite vorgesehen werden kann, um die Linienbreite des streifenförmigen Beleuchtungsstrahls auf der Oberfläche zu variieren.

Die Strahlformungseinheit weist mindestens eine Teleskopanordnung zur Strahlaufweitung der Beleuchtungsstrahlung in Vorschubrichtung auf. Eine solche Teleskopanordnung weist zwei optische Elemente auf, die im Abstand ihrer Brennweiten voneinander angeordnet sind. Bei den optischen Elementen kann es sich um reflektive oder refraktive Optiken handeln. Mindestens eines der optischen Elemente der Teleskopanordnung weist eine einstellbare Brennweite auf, um die Linienbreite des streifenförmigen Beleuchtungsstrahls auf dem Band einzustellen. Der aufgeweitete Beleuchtungsstrahl weist typischer Weise ein Aspektverhältnis von weniger als 1 : 50, in der Regel von weniger als 1 : 10 (Breite : Länge) auf. Er wird mittels einer Fokussiereinheit typischer Weise mindestens um einen Faktor 100, ggf. um einen Faktor von mehr als 10.000, z.B. um einen Faktor von ca. 85.000, in seiner Linienbreite reduziert.

In einer Ausführungsform ist die Auswerteeinrichtung zur Detektion des Überschreitens eines Grenzwerts des Verschmutzungsgrads und/oder eines Grenzwerts der Änderung des Verschmutzungsgrads der Oberfläche ausgebildet. Unter dem Verschmutzungsgrad mit Partikeln wird im Folgenden insbesondere die Partikeldichte, d.h. die Zahl der Partikel pro Flächenelement an der Oberfläche des Bandes verstanden. Befinden sich auf dem Band bzw. an der Oberfläche Partikel, so führen diese zu einer lokalen Erhöhung der Streulichtintensität, anhand derer auf die Partikeldichte und damit auf den Verschmutzungsgrad der Oberfläche geschlossen werden kann. Aufgrund der linienförmigen Beleuchtung bzw. Detektion kann sich ggf. Streulicht von unterschiedlichen Partikeln überlagern. Daher ist es in der Regel nicht möglich, eine exakte Partikeldichte und gleichzeitig eine Größenverteilung der Partikel anzugeben. Die Auswerteeinheit kann aber stattdessen die integrale Streulichtintensität einer Muster-Partikelverteilung einheitlicher Partikelgröße zuordnen, die zur Kalibrierung für einen jeweiligen Band- bzw. Substrattyp vorab gemessen wurde und die in der Auswerteeinheit hinterlegt ist. Veränderungen in dieser zugeordneten Partikeldichte und insbesondere Schwankungen dieser zugeordneten Partikeldichte können detektiert werden und es kann z.B. beim Überschreiten eines Grenzwerts ein Alarm ausgegeben werden, so dass maschinell oder von einem Bediener Maßnahmen zur Reduzierung der Partikeldichte eingeleitet werden können.

In einer weiteren Ausführungsform ist die Auswerteeinrichtung zur Bestimmung eines Verschmutzungsgrads der Oberfläche an mehreren sich jeweils in Vorschubrichtung erstreckenden Bandabschnitten ausgebildet, d.h. die Partikeldichte wird integral für jeweilige Bandabschnitte von typischer Weise identischer Länge ermittelt, wobei die Ergebnisse in einer Speichereinrichtung abgelegt werden können. Wird das Band mit konstanter Geschwindigkeit bewegt, kann eine Zuordnung der gespeicherten Ergebnisse zu den jeweiligen Band-Abschnitten auf besonders einfache Weise (durch eine Zeitmessung) erfolgen. Variiert die Geschwindigkeit des Bandes, ist es günstig, auf dem Band Markierungen vorzusehen, die z.B. mittels einer Kamera detektiert werden können, so dass eine eindeutige Zuordnung von detektierten Partikeldichten zu Bandabschnitten möglich ist.

An denjenigen Bandabschnitten, an denen eine zu hohe Partikeldichte festgestellt wurde, kann mittels einer der Vorrichtung zur Partikeldetektion in Vorschubrichtung nachgeordneten Reinigungseinrichtung eine (ggf. erneute) Reinigung durchgeführt werden. Alternativ ist es auch möglich, Bandabschnitte, in denen der Grenzwert des Verschmutzungsgrads überschritten wurde, von der weiteren Prozessierung auszuschließen. Es versteht sich, dass zur Begrenzung der gespeicherten Datenmenge ggf. nur auffällige Ergebnisse gespeichert werden sollten, z.B. nur Partikeldichten von Abschnitten, die über dem Grenzwert liegen.

In einer weiteren Ausführungsform umfasst die Vorrichtung einen Referenz-Detektor zur Bestimmung der Intensität der von der Lichterzeugungseinheit erzeugten Beleuchtungsstrahlung. Mit Hilfe des vom Referenz-Detektor aufgenommenen Signals können Schwankungen der Intensität der von der Lichterzeugungseinheit erzeugten Beleuchtungsstrahlung bei der Messung erfasst und daher eliminiert werden, indem ein Vergleich mit der von der Detektoreinheit erfassten Streulichtintensität erfolgt. Diese detektierte Streulicht-Intensität hängt von der Oberflächenrauheit sowie von der Korrelationslänge der Oberfläche ab. Die Streulichtintensität ist umso größer, je größer die Rauheit und je geringer die Korrelationslänge der Oberfläche ist. Streulichtintensitäten typischer Oberflächenrauheiten bzw. Korrelationslängen können für diverse Einfalls- sowie Detektionswinkel in der Auswerteeinheit hinterlegt und als Referenz für die Streulichtintensität der Partikel genutzt werden, um den Anteil der Partikel zur gesamten Streulichtintensität (Partikel + Oberfläche) zu bestimmen. Im Idealfall kann der Beitrag der Oberfläche für die Bestimmung der Partikeldichte vollständig eliminiert werden, d.h. an einer partikelfreien Oberfläche wird lediglich Intensitätsrauschen (auf der Null-Linie) gemessen.

In einer Ausführungsform weist die Lichterzeugungseinheit mindestens eine Lichtquelle zur Erzeugung von Beleuchtungsstrahlung in einem Wellenlängenbereich zwischen 300 nm und 1000 nm auf. Die Verwendung von Beleuchtungsstrahlung in diesem Wellenlängenbereich hat sich für die vorliegenden Anwendungen als günstig erwiesen. Die Beleuchtungsstrahlung kann von der Lichtquelle breitbandig bereitgestellt werden, d.h. über einen weiten Spektralbereich von z.B. von 400 nm bis 800 nm (Weißlichtspektrum, z.B. von einer Lampe erzeugt).

Bei einer weiteren Ausführungsform weist die Lichterzeugungseinheit mindestens eine Lichtquelle zur Erzeugung von Beleuchtungsstrahlung bei einer vorgegebenen Wellenlänge auf. Als Lichtquellen, welche Strahlung bei diskreten Wellenlängen erzeugen, können z.B. Laser, Laserdioden, LEDs oder Gasenladungslampen dienen. Für die Streulichtmessung ist es günstig, Beleuchtungsstrahlung bei einer einzigen vorgegebenen Wellenlänge oder in einem begrenzten Wellenlängenbereich zu verwenden.

In einer Weiterbildung weist die Lichterzeugungseinrichtung mindestens zwei Lichtquellen zur Erzeugung von Beleuchtungsstrahlung mit unterschiedlichen Wellenlängen auf. Insbesondere für die Schichtdickenbestimmung hat es sich als günstig erwiesen, zwei oder mehr, insbesondere drei Lichtquellen zu verwenden, deren Wellenlängen z.B. im roten, grünen und blauen Spektralbereich liegen können, um die Messgenauigkeit bzw. den Messbereich zu vergrößern.

In einer Ausführungsform weist die Detektoreinrichtung mindestens einen spektral auflösenden (und typischer Weise auch ortsauflösenden) Detektor zur simultanen Detektion der Beleuchtungsstrahlung bei zwei oder mehr unterschiedlichen Wellenlängen auf. Der Detektor kann hierbei insbesondere Sensorelemente aufweisen, die für Beleuchtungsstrahlung sowohl im roten, grünen und blauen Spektralbereich sensitiv sind bzw. Weißlicht in diese drei Komponenten zerlegen. Auf diese Weise kann eine simultane Detektion der Beleuchtungsstrahlung für alle drei verwendeten Wellenlängen erfolgen.

Bei einer Ausführungsform weist die Detektoreinrichtung mindestens einen ortsauflösenden Detektor zur ortsaufgelösten Detektion der Beleuchtungsstrahlung quer zur Vorschubrichtung auf. Der Detektor kann beispielsweise eine Mehrzahl von Sensoren in einer Zeile aufweisen, um eine eindimensionale, linienartige Detektion der Beleuchtungsstrahlung vorzunehmen. Der Detektor kann aber auch eine Mehrzahl von Sensoren bzw. Sensorzeilen in einer Rasteranordnung aufweisen, um eine zweidimensionale, streifenförmige Detektion der Beleuchtungsstrahlung vornehmen zu können. Die Detektorfläche weist hierbei eine Normalenrichtung auf, die dem Detektionswinkel der detektierten Beleuchtungsstrahlung entspricht. Für eine präzise Schichtdickenbestimmung ist es günstig, wenn der Detektor eine Ortsauflösung von mindestens 100 µm aufweist.

Bei einer Ausführungsform sind ein Einfallswinkel des streifenförmigen Beleuchtungsstrahls auf die Oberfläche des Bandes und/oder ein (jeweiliger) Detektionswinkel zur Detektion von an dem Band reflektierter, transmittierter und/oder gestreuter Beleuchtungsstrahlung einstellbar. Zur Einstellung des Einfallswinkels kann die Strahlformungseinheit ggf. gemeinsam mit der Lichterzeugungseinheit bzw. der Lichtquelle verschoben bzw. verschwenkt werden. Zu diesem Zweck können Bewegungseinheiten z.B. in Form von rotatorischen bzw. translatorischen Antrieben bzw. Motoren in der Vorrichtung vorgesehen werden. Entsprechend kann durch eine Verschwenkung bzw. Verschiebung eines bzw. mehrerer Detektoren der Detektoreinheit die Ausrichtung der jeweiligen Detektorfläche zu dem Band und damit der Detektionswinkel eingestellt werden.

Bei der Detektion von Partikeln kann die Einstellung des Einfallswinkels bzw. des Detektionswinkels vorgenommen werden, um das lokale Verhältnis von Oberflächenstreulicht zu Partikelstreulicht zu beeinflussen, das von der jeweiligen Oberflächenbeschaffenheit bzw. vom Materialtyp abhängt. Um Partikelstreulicht sicher detektieren zu können, sollte der Einfallswinkel bzw. der Detektionswinkel so gewählt werden, dass dieses Verhältnis größer als Eins ist. Der Detektionswinkel sollte hierbei in jedem Fall so gewählt werden, dass weder der spekulare Reflex (Einfallswinkel = Ausfallswinkel) noch die an dem Band transmittierte Beleuchtungsstrahlung auf den Detektor treffen. Auch bei der Dickenmessung an dem Substrat kann der Einfallswinkel bzw. der Detektionswinkel so gewählt werden, dass im zu erwartenden Messbereich für die Schichtdicke die Änderung der Reflexion in Abhängigkeit von der Schichtdicke besonders groß ist.

Weitere Merkmale und Vorteile der Erfindung ergeben sich aus der nachfolgenden Beschreibung von Ausführungsbeispielen der Erfindung, anhand der Figuren der Zeichnung, die erfindungswesentliche Einzelheiten zeigen, und aus den Ansprüchen. Die einzelnen Merkmale können je einzeln für sich oder zu mehreren in beliebiger Kombination bei einer Variante der Erfindung verwirklicht sein.

### Zeichnung

Ausführungsbeispiele sind in der schematischen Zeichnung dargestellt und werden in der nachfolgenden Beschreibung erläutert. Es zeigt
- Fig. 1: eine schematische Darstellung einer Vorrichtung, bei der zur Detektion von Partikeln an einer Oberfläche eines entlang einer Vorschubrichtung bewegten Bandes eine Streulichtmessung durchgeführt wird,
- Fig. 2: eine schematische Darstellung eines Ausführungsbeispiels einer Strahlformungseinheit mit zwei Strahlteleskopen zur Formung eines streifenförmigen Beleuchtungsstrahls für die Vorrichtung von Fig. 1,
- Fig. 3: ein weiteres Ausführungsbeispiel einer Strahlformungseinheit mit zwei Strahlteleskopen, welche jeweils zwei Zylinderlinsen aufweisen,
- Fig. 4: ein Ausführungsbeispiel der Strahlformungseinheit mit drei Strahlteleskopen,
- Fig. 5: eine schematische Darstellung einer nicht zur Erfindung gehörigen Vorrichtung, welche zur Schichtdickenbestimmung an einem Band eine Messung von an dem Band reflektierter Beleuchtungsstrahlung vornimmt,
- Fig. 6: eine nicht zur Erfindung gehörige Vorrichtung, bei welcher zusätzlich an dem Band transmittierte Beleuchtungsstrahlung detektiert wird, sowie
- Fign.7a-d: Schaubilder des Anteils von an dem Band reflektierter Beleuchtungsstrahlung in Abhängigkeit von der Schichtdicke des Bandes.

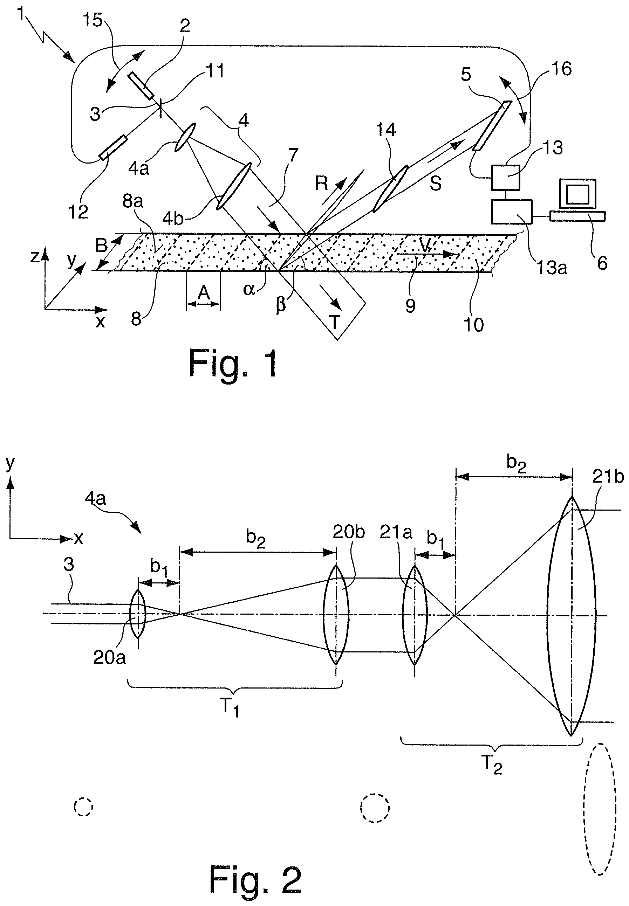

In Fig. 1 ist schematisch eine Vorrichtung 1 gezeigt, welche eine Lichterzeugungseinheit 2 mit einer einzigen Lichtquelle in Form eines He-Ne-Lasers zur Erzeugung von Beleuchtungsstrahlung 3, eine im Strahlengang nachgeordnete Strahlformungseinheit 4 sowie eine Detektoreinheit 5 aufweist, die mit einer Auswerteeinrichtung 6, z.B. in Form eines Computers, in signaltechnischer Verbindung steht.

Die Strahlformungseinheit 4 dient zur Formung eines streifenförmigen Beleuchtungsstrahls 7 sowie zur Fokussierung des Beleuchtungsstrahls 7 unter einem Einfallwinkel α auf ein Band 8, bei dem es sich im vorliegenden Beispiel um ein Substrat zur Herstellung von organischen LEDs (OLEDs) handelt. Die Strahlformungseinheit 4 weist zwei Teile auf, nämlich eine Aufweitungseinheit 4a zur Formung des streifenförmigen Beleuchtungsstrahls 7 und eine Fokussierungseinheit 4b zur Fokussierung des streifenförmigen Beleuchtungsstrahls 7 auf das Band 8, um dort eine linienförmige Beleuchtung zu erhalten.

Das Band 8 wird mittels einer durch einen Pfeil angedeuteten, herkömmlichen Bewegungseinrichtung 9 (z.B. mittels angetriebener Rollen) mit im Wesentlichen konstanter Geschwindigkeit v entlang einer Vorschubrichtung X bewegt. Das Band 8 kann beispielsweise von einer (nicht gezeigten) Spule abgewickelt werden oder kann von einer vorausgehenden Prozessierungs-Station - z.B. zum Aufbringen einer Beschichtung - in den Bereich der Vorrichtung 1 transportiert werden. Die Geschwindigkeit v des Bandes 8 liegt typischer Weise in der Größenordnung von ca. 1 m/min bis ca. 50 m/min.

Die Detektoreinheit 5 besteht im vorliegenden Beispiel aus einem Zeilendetektor mit einer Detektorzeile, die senkrecht zur Vorschubrichtung X des Bandes 8 (d.h. in Y-Richtung) verläuft, d.h. parallel zu der an dem Band 8 von dem streifenförmigen Beleuchtungsstrahl 7 gebildeten Fokuslinie. Es versteht sich, dass die Ausrichtung des streifenförmigen Beleuchtungsstrahls 7 bzw. der Fokuslinie nicht zwingend senkrecht zur Vorschubrichtung X erfolgen muss, obgleich eine senkrechte Ausrichtung sich in der Praxis als günstig erwiesen hat.

Die Detektoreinheit 5 bzw. die Normale der Detektorfläche ist bezüglich des Bandes 8 unter einem Detektionswinkel β zur Oberfläche 8a des Bandes 8 ausgerichtet. Der Detektionswinkel β (≠ α) weicht bei der in Fig. 1 gezeigten Vorrichtung 1 vom Einfallswinkel a ab, so dass auf die Detektoreinheit 5 lediglich an dem Band 8 gestreute Beleuchtungsstrahlung S und nur ein äußerst geringer Anteil an spekular reflektierter Beleuchtungsstrahlung R sowie an transmittierter Beleuchtungsstrahlung T auftrifft.

Bei dem in Fig. 1 gezeigten Beispiel wird ein einzelner (cw-)Laser 2 als Lichtquelle verwendet. Es versteht sich, dass alternativ auch eine (cw-)Laserdiode verwendet werden kann, sofern deren Ausgangsleistung ausreicht, um das Band 8 über seine gesamte Breite (in Y-Richtung) ausreichend auszuleuchten. Alternativ können auch mehrere Lichtquellen verwendet werden, die in Y-Richtung versetzt z.B. in einer Zeile angeordnet sind, um das Band über seine gesamte Breite auszuleuchten, wobei eine jeweilige Lichtquelle einem jeweiligen Breitenbereich entlang der Breitenrichtung (Y-Richtung) des Bandes 8 zugeordnet ist. Bei der Verwendung mehrerer Lichtquellen als Lichterzeugungseinheit kann die Leistung einer einzelnen Lichtquelle geringer ausfallen, so dass sich eine solche Lösung insbesondere für große Breiten B des Bandes 8 von z.B. mehr als 1 bis 2 Meter anbietet.

Typischer Weise sollte die Wellenlänge der Beleuchtungsstrahlung 3 für die Streulichtmessung zwischen ca. 600 nm und 900 nm liegen, wobei die Polarisation der Laserstrahlung beliebig gewählt werden kann, bevorzugt aber senkrecht zur Einfallsebene verläuft (s-Polarisation). Der im vorliegenden Beispiel als Lichterzeugungseinheit 2 verwendete He-Ne-Laser weist eine Wellenlänge um ca. 635 nm mit 2 Watt Ausgangsleistung auf und kann z.B. für ein Band 8 mit einer Breite B von ca. 30 cm eingesetzt werden. Alternativ können für die Ausleuchtung einer Breite B von 30 cm auch vier in einer Zeile angeordnete Laserdioden mit einer Leistung von jeweils 500 mW verwendet werden.

Es versteht sich, dass auch eine (Gasentladungs-)Lampe, welche günstiger Weise mindestens eine Spektrallinie mit einer Wellenlänge im Spektralbereich von ca. 600 nm bis 900 nm aufweist, als Lichtquelle verwendet werden kann. Die von der Lampe erzeugte Beleuchtungsstrahlung kann mit Hilfe von optischen Elementen (z.B. Linsen oder dergleichen) vor der Erzeugung des streifenförmigen Beleuchtungsstrahls 7 kollimiert werden. Wird eine breitbandig emittierende Lichtquelle (z.B. eine Glühlampe) verwendet, sollte das Spektrum der Beleuchtungsstrahlung mit Hilfe von Filtern auf den für die Streulichtmessung gewünschten Wellenlängenbereich eingeschränkt werden.

Ein geringer Teil (in der Regel < 10%) der Intensität der von der Lichterzeugungseinheit 2 erzeugten Beleuchtungsstrahlung 3 wird über einen Strahlteiler 11 umgelenkt und trifft auf einen Referenz-Detektor 12. Der Strahlteiler 11 kann aus einem Substrat bestehen, welches einseitig oder beidseitig beschichtet oder unbeschichtet ist. Als Referenz-Detektor 12 kann beispielsweise ein Laserleistungsmessgerät oder ggf. eine Photodiode dienen. Bei der Messung der Laserleistung sollte darauf geachtet werden, dass die Detektorfläche größer als der auftreffende Strahlquerschnitt ist. Gegebenfalls ist es zu diesem Zweck erforderlich, die ausgekoppelte Beleuchtungsstrahlung zu fokussieren, was z.B. durch eine (nicht gezeigte) Konvexlinse erreicht werden kann.

Bei der Verwendung einer Lichterzeugungseinheit 2 mit mehreren Lichtquellen kann ein einziger Referenz-Detektor 12 für alle Lichtquellen verwendet werden oder es können zwei oder mehr Referenz-Detektoren vorgesehen sein, die jeweils mehreren Lichtquellen zugeordnet sind. Im aufwändigsten Fall wird jeder Lichtquelle ein eigener Referenz-Detektor zugeordnet. Das von dem Referenz-Detektor 12 gelieferte Intensitäts-Signal sowie ein entsprechendes Signal vom Detektor 5 werden einem Verstärker 13 zugeführt und dort verstärkt, bevor diese in einem A/D-Wandler 13a digitalisiert und der Auswerteeinheit 6 zugeführt werden.

Die Auswerteeinheit 6 dient der Bestimmung des Verschmutzungsgrads der Oberfläche 8a, welche durch dort abgelagerte Partikel 10 erzeugt wird. Der Verschmutzungsgrad wird im vorliegenden Beispiel über die Partikeldichte an der Oberfläche 8a des Bandes 8 bestimmt. Das Vorhandensein von Partikeln 10 an der Oberfläche 8a führt hierbei zu lokalen Erhöhungen der Streulichtintensität, anhand derer auf die Partikeldichte geschlossen werden kann. Zur Kalibrierung können Streulichtintensitäten von Proben mit bekannter Partikelverteilung dienen, die in der Auswerteeinheit 6 hinterlegt sind. Auch der Beitrag der Oberfläche zur Streuung kann berücksichtigt werden, indem für diverse Einfallswinkel α und Detektionswinkel β die Streulichtintensitäten für typische Oberflächenrauheiten und Korrelationslängen hinterlegt werden. Der Einfallswinkel α und der Detektionswinkel β können hierbei insbesondere so gewählt werden, dass das Verhältnis zwischen an der Oberfläche 8a lokal gestreuter Beleuchtungsstrahlung S und an den Partikeln 10 lokal gestreuter Beleuchtungsstrahlung S möglichst groß, zumindest aber größer Eins wird.

Da sich aufgrund der linien- bzw. streifenweisen Detektion Streulicht mehrerer Partikel 10 mit ggf. unterschiedlichen Partikelgrößen überlagert, ist es in der Regel problematisch, gleichzeitig die Partikeldichte und eine präzise Größenverteilung der Partikel 10 zu ermitteln. Daher ordnet die Auswerteeinheit 6 die integrale Partikel-Streulichtintensität einer Partikelverteilung mit einer einheitlichen Partikelgröße zu, anhand derer das Überschreiten eines Grenzwerts der Änderung der Partikeldichte bzw. das Überschreiten eines Grenzwerts der Partikeldichte während der Bewegung des Bandes 8 bestimmt werden können.

Bei dem in Fig. 1 gezeigten Beispiel wird eine solche Bestimmung für sich jeweils über eine Länge von ca. 10 cm in Vorschubrichtung X erstreckende Bandabschnitte A vorgenommen, für welche die Partikeldichte bzw. die Streulichtintensität jeweils integral ermittelt wird. Wird das Band 8 mit konstanter Geschwindigkeit v bewegt, kann eine Zuordnung der gespeicherten Ergebnisse zu den jeweiligen Band-Abschnitten A auf besonders einfache Weise (durch eine Zeitmessung) erfolgen. Variiert die Geschwindigkeit v des Bandes 8, ist es günstig, auf dem Band Markierungen vorzusehen, die z.B. mittels einer (nicht gezeigten) Kamera detektiert werden können, so dass eine eindeutige Zuordnung von detektierten Partikeldichten zu Bandabschnitten A möglich ist.

An denjenigen Bandabschnitten A, an denen eine zu hohe Dichte an Partikeln 10 festgestellt wurde, kann beispielsweise mittels einer der Vorrichtung 1 in Vorschubrichtung X nachgelagerten Reinigungseinrichtung eine (erneute) Reinigung durchgeführt werden. Alternativ ist es auch möglich, Bandabschnitte A, in denen der Grenzwert des Verschmutzungsgrads überschritten wurde, von der weiteren Prozessierung auszuschließen. Es versteht sich, dass zur Begrenzung der gespeicherten Datenmenge ggf. nur auffällige Ergebnisse gespeichert werden sollten, z.B. nur Partikeldichten von Bandabschnitten A, die über dem Grenzwert liegen. Auch eine plötzliche Änderung der Partikeldichte, beispielsweise ein abrupter Anstieg der Partikeldichte, kann in der Auswerteeinheit 6 erkannt und dazu genutzt werden, einen Alarm auszulösen, so dass ein Bediener ggf. die Quelle der Partikel aufspüren und diese beseitigen kann.

Nachfolgend werden anhand von Fig. 2 bis Fig. 4 Ausführungsbeispiele der Aufweitungseinheit 4a der Strahlformungseinheit 4 beschrieben. Hierbei wird davon ausgegangen, dass die von der Lichterzeugungseinheit 2 ausgehende Beleuchtungsstrahlung 3 kollimiert und parallel zur optischen Achse in die Aufweitungseinheit 4a eintritt. Es versteht sich, dass die verwendeten Lichtquellen (Laser, Laserdioden oder kollimierte Lampenstrahlen) eine mehr oder weniger große Divergenz aufweisen, die durch (nicht gezeigte) Optiken ausgeglichen wird, indem die Brennweiten und Abstände der verwendeten Optiken entsprechend angepasst werden. Die zu diesem Zweck verwendeten Optiken sollten so ausgebildet werden, dass die Beleuchtungsstrahlen nicht beschnitten werden.

Fig. 2 zeigt ein Ausführungsbeispiel der Aufweitungseinheit 4a in einer Projektion in die XY-Ebene. Die Aufweitungseinheit 4a weist zwei Teleskopanordnungen T₁, T₂ mit jeweils zwei Linsen 20a, 20b, 21a, 21b auf, um den in Fig. 2 links unten dargestellten, runden Strahlquerschnitt der Beleuchtungsstrahlung 3 aufzuweiten. Das erste Teleskop T₁ weist zwei sphärische Konvexlinsen 20a, 20b auf, welche in einem Abstand angeordnet sind, der der Summe ihrer Brennweiten b1 + b2 entspricht. Soll z.B. eine Vergrößerung des Strahlquerschnitts um den Faktor Acht (8 x) erfolgen, kann die erste sphärische Linse 20a eine Brennweite von 10 mm und die zweite sphärische Linse 20b eine Brennweite von 80 mm aufweisen. Es versteht sich, dass eine 8-fache Vergrößerung auch erreicht werden kann, wenn z.B. die erste Linse 20a durch eine (sphärische) Konkavlinse mit einer Brennweite von b1 = - 10 mm ersetzt wird.

Das zweite Strahlteleskop T₂ besteht aus zwei Zylinderlinsen 21a, 21b, welche die Beleuchtungsstrahlung 3 senkrecht zur Einfallsebene (d.h. senkrecht zur Vorschubrichtung X) des Bandes 8 weiter vergrößern. Um beispielsweise eine Aufweitung um den Faktor 37,5 für die Beleuchtungsstrahlung 3 zu erreichen, wird für die erste Zylinderlinse 21a eine Brennweite b1 von 10 mm und für die zweite Zylinderlinse 21b eine Brennweite b2 von 375 mm verwendet, so dass aus dem runden Strahlquerschnitt ein ovaler Strahlquerschnitt erzeugt wird, welcher in Fig. 2 rechts unten (nicht maßstabsgetreu) dargestellt ist. Es versteht sich, dass auch in diesem Fall die erste, konvexe Zylinderlinse 21a durch eine konkave Zylinderlinse ersetzt werden kann, deren Brennweite b1 bei -10 mm liegt, um eine Strahlaufweitung um den Faktor von 37,5 zu erreichen.

Durch die Aufweitungseinheit 4a von Fig. 2 kann somit im vorliegenden Beispiel Beleuchtungsstrahlung 3 mit einem runden Strahlquerschnitt und einem Durchmesser von 1 mm am ersten Teleskop T₁ in einen runden Strahlquerschnitt mit einem Durchmesser von 8 mm und am zweiten Teleskop T₂ in einen ovalen Strahlquerschnitt mit einer Länge von 300 mm und einer Breite von 8 mm aufgeweitet werden, welcher als streifenförmiger Beleuchtungsstrahl 7 mittels der Fokussierungseinheit 4b auf das Band 8 fokussiert und hierbei in seiner Ausdehnung in Vorschubrichtung X verkleinert wird (s.u.).

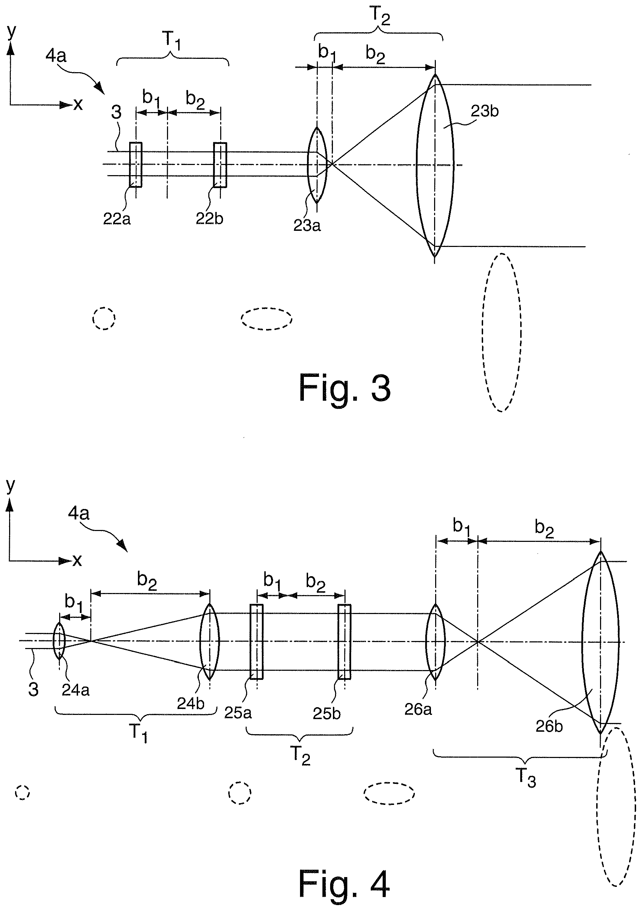

Fig. 3 zeigt ein weiteres Ausführungsbeispiel der Aufweitungseinheit 4a, bei welcher beide Teleskopanordnungen T₁, T₂ aus Zylinderlinsen 22a, 22b, 23a, 23b bestehen. Die erste Teleskopanordnung T₁ weitet die Beleuchtungsstrahlung 3 hierbei parallel zur Einfallsebene auf das Band 8 auf, die zweite Teleskopanordnung T₂ weitet die Beleuchtungsstrahlung 3 senkrecht dazu (in Y-Richtung) auf, so dass der in Fig. 3 rechts unten dargestellte, ovale Strahlquerschnitt entsteht. Falls dieser Strahlquerschnitt mit dem in Fig. 2 gezeigten Beispiel identisch sein soll, können die Brennweiten der ersten Teleskopanordnung T₁ der Aufweitungseinheit 4a von Fig. 2 übernommen werden, während für die zweite Teleskopanordnung T₂ die Brennweite der ersten Zylinderlinse 23a bei b1 = 10 mm (oder -10 mm) und die Brennweite b2 der zweiten Zylinderlinse 23b bei b2 = 3000 mm liegt.

Bei einem in Fig. 4 gezeigten Ausführungsbeispiel der Aufweitungseinheit 4a werden drei Teleskopanordnungen T₁, T₂, T₃ mit jeweils zwei Linsen 24a, 24b, 25a, 25b, 26a, 26b zur Strahlaufweitung genutzt. Die erste Teleskopanordnung T₁ weist zwei sphärische Linsen 24a, 24b auf und kann z.B. zur Vergrößerung des Strahlquerschnitts um den Faktor 6 (6-fach) Brennweiten von b1 = + 10 mm (oder - 10 mm) sowie b2 = + 60 mm aufweisen. Die zweite Teleskopanordnung T₂ mit Zylinderlinsen 25a, 25b weitet die Beleuchtungsstrahlung 3 parallel zur Einfallsebene des streifenförmigen Beleuchtungsstrahls 7 auf das Band 8 auf, beispielsweise um einen Faktor 14,3 (b1 = + 10mm bzw. - 10 mm, b2 = 143 mm). Die dritte Teleskopanordnung T₃ mit ebenfalls zwei Zylinderlinsen 26a, 26b weitet den Beleuchtungsstrahl 3 senkrecht zur Einfallsebene (in Y-Richtung) beispielsweise um einen Faktor 50 auf (b1 = + 10 mm oder b1 = - 10 mm, b2 = 500 mm).

Bei der Aufweitungseinheit 4a von Fig. 4 wird somit zunächst Beleuchtungsstrahlung 3 mit einem kreisförmigen Strahlquerschnitt von 1 mm Durchmesser zu einem kreisförmigen Strahlquerschnitt mit einem Durchmesser von 6 mm, dann zu einem ovalen Stahlquerschnitt mit 86 mm Länge und 6 mm Breite und nachfolgend zu einem Oval mit 86 mm Breite und 300 mm Länge umgewandelt.

Um die kleinste detektierbare Partikelgröße bzw. die Geschwindigkeit bei der Detektion von Partikeln für eine jeweilige Anwendung zu optimieren, ist es günstig, die Linienbreite des streifenförmigen Beleuchtungsstrahls 7 in Vorschubrichtung X verändern zu können. Um eine solche Variation bei den in Fig. 3 und Fig. 4 gezeigten Beispielen der Aufweitungseinheit 4a vorzunehmen, ist es günstig, wenn die Brennweite zumindest einer Zylinderlinse 22a, 22b des ersten Zylinder-Linsenteleskops T₁ von Fig. 3 bzw. einer Zylinderlinse 24a, 24b des zweiten Teleskops T₂ in Fig. 4 variabel ausgeführt wird, z.B. indem in ihrer Geometrie veränderbare Linsen vorgesehen werden. Bei dem in Fig. 4 gezeigten Ausführungsbeispiel sind resultierende Strahlbreiten bei der Variation der Brennweite b2 der zweiten Zylinderlinse 25b der zweiten Teleskopanordnung T₂ in nachfolgender Tabelle (Tabelle 1) angegeben:

**Tabelle 1**

| **Brennweiten (mm)** | | | | | | **resultierender Strahl** | |
|---|---|---|---|---|---|---|---|
| **T₁** | | **T₂** | | **T₃.** | | **Breite (mm)** | **Länge (mm)** |
| **b1** | **b2** | **b1** | **b2** | **b1** | **b2** | | |
| -10 | + 60 | -10 | 13,5 | -10 | 500 | 8,1 | 300 |
| -10 | + 60 | -10 | 19,3 | -10 | 500 | 11,6 | 300 |
| -10 | + 60 | -10 | 45,2 | -10 | 500 | 27,1 | 300 |
| -10 | + 60 | -10 | 68,3 | -10 | 500 | 41,0 | 300 |
| -10 | + 60 | -10 | 142,7 | -10 | 500 | 85,6 | 300 |

Wie bereits weiter oben beschrieben wurde, folgt auf die Aufweitungseinheit 4a die Fokussierungseinheit 4b, welche als Zylinderlinse ausgebildet ist welche die Beleuchtungsstrahlung 3 bzw. den Beleuchtungsstrahl 7 auf das Band 8 fokussiert, wobei der Strahlquerschnitt in Vorschubrichtung X verkleinert wird. Die Fokussierungseinheit 4b in Form einer Zylinderlinse kann beispielsweise eine Brennweite von 100 mm aufweisen, wobei das Band 8 sich möglichst nahe an der Fokuslinie der Fokussierungseinheit 4b befinden sollte. Die Veränderung des Strahlquerschnitts mittels einer Fokussierungseinheit 4b in Form einer Zylinderlinse ist für unterschiedliche Breiten der einfallenden Beleuchtungsstrahlung 3 folgender Tabelle (Tabelle 2) zu entnehmen:

**Tabelle 2**

| **Eingehender Strahl** | | **Resultierender Strahl** | |
|---|---|---|---|
| **Breite (mm)** | **Länge (mm)** | **Breite (µm)** | **Länge (mm)** |
| 8,1 | 300 | 10 | 300 |
| 11,6 | 300 | 7 | 300 |
| 27,1 | 300 | 3 | 300 |
| 41,0 | 300 | 2 | 300 |
| 85,6 | 300 | 1 | 300 |

Wie Tabelle 2 zu entnehmen ist, führt im vorliegenden Beispiel die Fokussierung zu einer Reduzierung der Breite des Strahlquerschnitts auf dem Band 8 um ca. einen Faktor 500, wobei auch Faktoren bis ca. 90.000 verwendet werden können. Für die Streulichtmessung sollte der linienförmige Beleuchtungsstrahl eine Linienbreite von ca. 10 µm bis ca. 20 µm nicht überschreiten, wobei zur Detektion von Partikeln im Sub-Mikrometerbereich deutlich kleinere Linienbreiten (von weniger als 1 µm bzw. 0,1 µm) erforderlich sind.

Es versteht sich, dass zur Ausleuchtung von Bändern 8 mit einer großen Breite B auch mehrere Strahlformungseinheiten 4 parallel, d.h. in Y-Richtung nebeneinander verwendet werden können, so dass sich größere resultierende Strahllängen ergeben. Durch eine Fünffach-Parallelisierung kann beispielsweise aus einer Strahllänge von 300 mm wie in Fig. 2 bis Fig. 4 dargestellt eine Strahllänge von 1500 mm in Y-Richtung erzeugt werden.

Die an dem Band 8 bzw. an den im Bereich der linienförmigen Beleuchtung befindlichen Partikeln 10 in einen Raumwinkelbereich gestreute Beleuchtungsstrahlung S wird an einer Kollimationseinrichtung 14 in Form einer weiteren Zylinderlinse kollimiert. Die Brennweite der Kollimationseinrichtung 14 bzw. der Zylinderlinse entspricht hierbei typischer Weise dem Abstand zum Band 8, beispielsweise 100 mm. Es versteht sich, dass die Kollimationseinrichtung 14 auch mehrere Zylinderlinsen, z.B. entlang einer in Y-Richtung verlaufenden Linie aufweisen kann, um gestreute Beleuchtungsstrahlung S auch bei Bändern 8 mit großer Breite B (in der Größenordnung von Metern) kollimieren zu können.

Entsprechend weist die Detektoreinheit 5 einen oder mehrere entlang einer Reihe (in Y-Richtung) angeordnete CCD-Zeilendetektoren (1-dimensionale Detektion) oder CCD-Arrays (2-dimensionale Detektion) auf. Den Detektoren können (nicht gezeigte) Lichtwellenleiter vorgeschaltet sein, die zeilenförmig bzw. in einem 2-dimensionalen Raster angeordnet sind und die zum Sammeln der gestreuten Beleuchtungsstrahlung S dienen.

Zusätzlich oder alternativ zur Bestimmung des Verschmutzungsgrads bzw. der Partikeldichte an der Oberfläche 8a des Bandes 8 kann es auch günstig sein, während der Prozessierung des Bandes 8 Informationen über die Dicke des Bandes 8 bzw. über die Dicke einzelner Schichten des Bandes 8 zu erhalten.

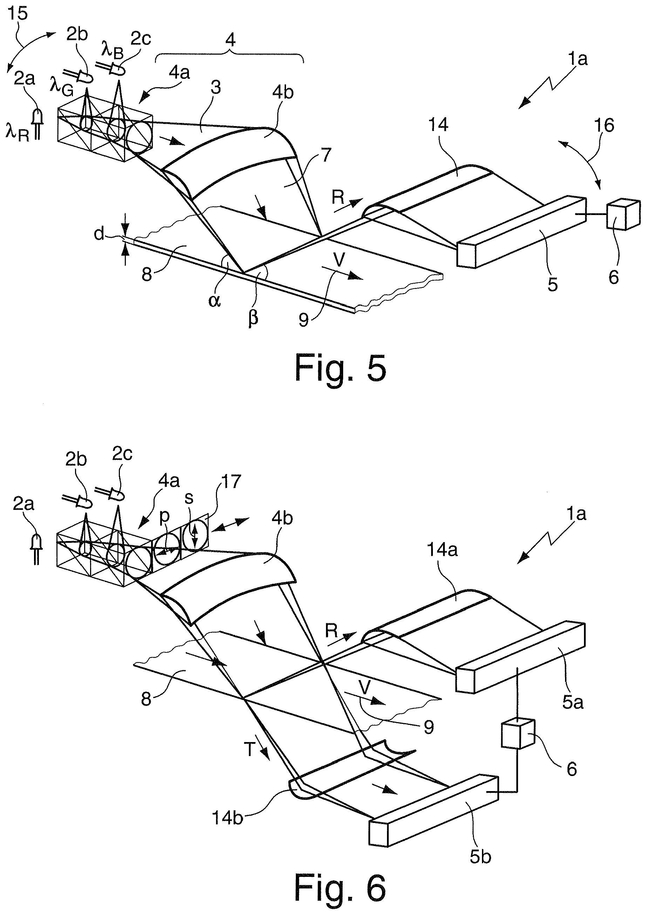

Fig. 5 zeigt eine nicht zur Erfindung gehörige Vorrichtung 1a zur Bestimmung der Dicke D von Schichten eines folienartigen Bandes 8. Die Vorrichtung 1a von Fig. 5 weist wie die Vorrichtung 1 von Fig. 1 eine Lichterzeugungseinheit auf, die im vorliegenden Beispiel aus drei Lichtquellen 2a bis 2c besteht. Die Lichtquellen 2a bis 2c sind als Laserdioden ausgebildet, welche Beleuchtungsstrahlung 3 mit einer Wellenlänge λ_{R}, λ_{G}, λ_{B} im roten, grünen und blauen Wellenlängenbereich, d.h. bei ca. 610 nm, 550 nm bzw. 450 nm erzeugen. Die Beleuchtungsstrahlung 3 wird in einer Strahlformungseinheit 4, genauer gesagt in einer Aufweitungseinheit 4a überlagert und nach der Fokussierung in einer als Hohlspiegel ausgebildeten Fokussiereinheit 4b in einen streifenförmigen Beleuchtungsstrahl 7 mit drei Wellenlängen λ_{R}, λ_{G}, λ_{B} umgewandelt, welcher eine linienförmige Beleuchtung auf dem Band 8 erzeugt.

Von dem Band 8 reflektierte Beleuchtungsstrahlung R wird über einen als Kollimationseinrichtung 14 dienenden Hohlspiegel auf einen Zeilendetektor 5 kollimiert bzw. gebündelt (streifenförmige Detektion). Um die an dem Band 8 spekular reflektierte Beleuchtungsstrahlung R zu messen, stimmen der Einfallswinkel α des linearen Beleuchtungsstrahls 3 und der Detektionswinkel β überein (α = β). Eine mit dem Detektor 5 verbundene Auswerteeinheit 6 dient der Bestimmung der Dicke d einer Schicht des Bandes 8, welches im vorliegenden Beispiel eine Schichtstruktur aufweist. Gegebenenfalls können auch die Dicken mehrerer Schichten oder die Gesamtdicke des Bandes bestimmt werden.

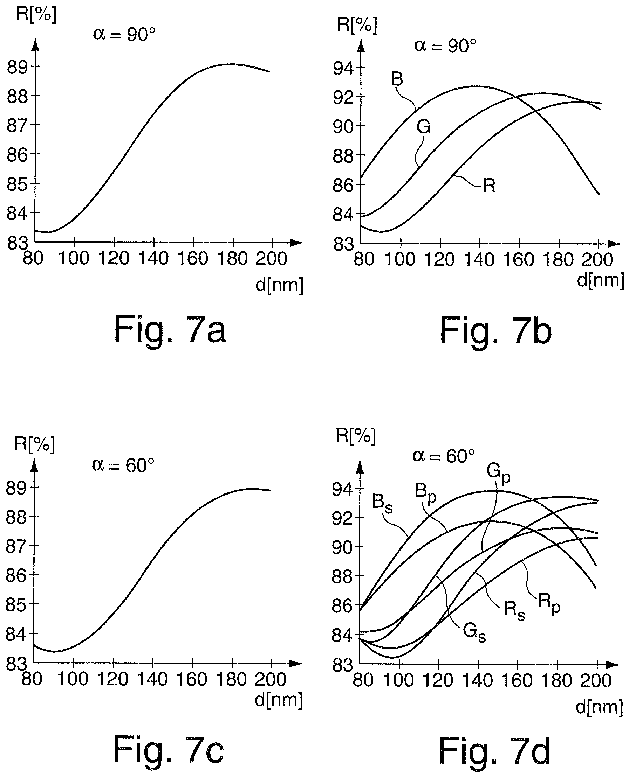

Um die Schichtdicke d zu ermitteln, wird die Intensität der reflektierten Beleuchtungsstrahlung R bzw. die Reflektivität des Bandes 8 für die Beleuchtungsstrahlung 3 mit bekannten dickenabhängigen Reflektivitätskurven für ein Band 8 mit identischer Schichtstruktur verglichen. Für das Beispiel eines Bandes 8 mit einer dünnen PMMA-Schicht auf einer dünnen Aluminiumschicht sind in Fig. 7b drei Reflektivitätskurven (R, G, B) für die Reflektivität R (in %) bei den jeweiligen drei Wellenlängen λ_{R}, λ_{G}, λ_{B} und einem Einfallswinkel von α = 90° (d.h. senkrechtem Einfall) in Abhängigkeit von der Schichtdicke d der PMMA-Schicht (zwischen 80 nm und 200 nm) dargestellt.

Fig. 7a zeigt hingegen die Reflektivität R (in %) des Bandes 8 bei der Verwendung einer breitbandigen Lichtquelle mit einem Weißlicht-Spektrum (von ca. 400 nm bis ca. 800 nm), ebenfalls bei senkrechtem Einfall (a = 90°). Fig. 7c zeigt eine entsprechende Darstellung für einen Einfallswinkel von a = 60°. Anhand von Fig. 7a,c ist erkennbar, dass sich für Schichtdicken zwischen ca. 100 nm und ca. 160 nm die Reflektivität im Wesentlichen linear, und zwar um ca. 5 % ändert, so dass die Dicke d in diesem Dickenbereich mit guter Genauigkeit bestimmt werden kann. Sofern der Detektor 5 eine Intensitätsauflösung von ca. 0,1 % aufweist, lassen sich hierbei Dickenschwankungen von ca. 1,1 nm auflösen.

Wie anhand von Fig. 7b erkennbar ist, hängt der Dickenbereich, in dem sich signifikante Veränderungen der Reflektivität R einstellen, von der gewählten Wellenlänge ab. Es ist daher günstig, Beleuchtungsstrahlung mit einer Wellenlänge auszuwählen, welche in dem zu detektierenden Dickenbereich einen im Wesentlichen linearen Verlauf der Reflektivitätskurve bzw. eine möglichst große Änderung der Reflektivität aufweist. Besonders günstig ist es, eine simultane Vermessung bei mehreren Wellenlängen (z.B. im roten, grünen und blauen Spektralbereich) vorzunehmen, um einen möglichst großen Bereich zu erhalten, in dem die Dickenmessung durchgeführt werden kann, sowie um die Messgenauigkeit zu erhöhen. Hierbei erweist es sich als günstig, wenn der Detektor 5 für drei unterschiedliche Wellenlängen (z.B. von 450 nm, 550 nm und 610 nm) selektive Empfängerelemente (Sensorpixel) enthält, die beispielsweise ein Weisslichtspektrum in drei Farben zerlegen, so dass sich schnelle RGB-Spektrometrie durchführen lässt.

Eine weitere Verbesserung bezüglich des Messbereichs sowie der Messgenauigkeit wird ermöglicht, wenn zusätzlich eine Trennung der Beleuchtungsstrahlung in senkrecht und parallel zur Einfallsebene polarisierte Beleuchtungsstrahlung 3 vorgenommen wird (Ellipsometrie). Zu diesem Zweck weist eine in Fig. 6 gezeigte Abwandlung der Vorrichtung 1a einen Polarisationsfilter 17 auf, welcher mittels einer nicht näher bezeichneten Verschiebeeinrichtung in den Strahlengang der Beleuchtungsstrahlung 3 eingebracht werden kann und welcher wahlweise nur s-polarisierte Beleuchtungsstrahlung oder nur p-polarisierte Beleuchtungsstrahlung durchtreten lässt, wobei die Umschaltung synchron zum Zeilentakt beim Auslesen des Detektors 5 erfolgen sollte. Beim synchronen Auslesen der Zeilensignale des Detektors 5 werden somit sechs Signale Rₛ, Gₛ, Bₛ, R_{P}, G_{P}, B_{P} erhalten, welche mit in Fig. 7d dargestellten, dickenabhängigen Reflektivitätskurven verglichen werden können, um die Dicke d der Schicht aus PMMA zu bestimmen.

Es versteht sich, dass der Einfallswinkel α und der Detektionswinkel β in Abhängigkeit von der jeweiligen Anwendung, d.h. der jeweils zu untersuchenden Schichtstruktur bzw. des jeweiligen Schicht-Materials eingestellt werden können, beispielsweise indem die Lichtquellen 2a bis 2c gemeinsam mit der Strahlformungseinheit 4 mittels einer Verschwenkeinheit 15 verschwenkt werden bzw. indem die Kollimationseinheit 14 gemeinsam mit dem Detektor 5 durch eine entsprechende Verschwenkeinheit 16 verschwenkt werden.

Auch kann zusätzlich oder alternativ zur Detektion der an dem Band 8 reflektierten Beleuchtungsstrahlung R auch die an dem Band 8 transmittierte Beleuchtungsstrahlung T gemessen werden. Eine nicht zur Erfindung gehörige Vorrichtung 1a, bei welcher sowohl die reflektierte als auch die transmittierte Beleuchtungsstrahlung R, T mittels eines jeweiligen zeilen- bzw. matrixförmigen Detektors 5a, 5b detektiert werden, ist ebenfalls in Fig. 6 dargestellt.

Auf die in Zusammenhang mit Fig. 5 und Fig. 6 beschriebene Weise kann eine schnelle und hochpräzise Schichtdickenmessung an Bändern bzw. an dünnen Folien vorgenommen werden. Es versteht sich, dass hierbei anders als in Fig. 5 und Fig. 6 gezeigt eine refraktive Strahlformungseinheit 4 bzw. Kollimationseinheit 14 verwendet werden kann (bzw. refraktive und reflektive Optiken in Kombination verwendet werden können). Wie bereits weiter oben im Zusammenhang mit Fig. 1 dargestellt wurde, kann als Detektor 5 ein durchgehender Zeilensensor, welcher sich über die gesamte Breite B des Bandes 8 erstreckt (z.B. mit >20000 Pixeln) oder alternativ mehrere Zeilensensoren verwendet werden, deren Detektionsbereiche randseitig aneinander anstoßen oder sich ggf. randseitig überlappen.

Auch kann an einer nicht zur Erfindung gehörigen Vorrichtung 1, 1a sowohl die in Zusammenhang mit Fig. 5 und Fig. 6 beschriebene Schichtdickenmessung als auch die Bestimmung des Verschmutzungsgrads bzw. der Partikeldichte an der Oberfläche 8a des Bandes 8 durchgeführt werden. Zu diesem Zweck ist es erforderlich, den Detektionswinkel β bzw. den Einfallswinkel α so zu variieren, dass wahlweise reflektierte bzw. gestreute Beleuchtungsstrahlung R, S mittels des Detektors 5 detektiert wird. Insbesondere kann die in Fig. 5 gezeigte Vorrichtung 1a für die Streulichtmessung um einen oder mehrere Referenzdetektoren 12 ergänzt werden, sofern diese nicht ohnehin bereits in der Vorrichtung 1a vorhanden sind. Auch kann selbstverständlich die Vorrichtung von Fig. 1 zur Dickenmessung genutzt werden, indem der Detektionswinkel β sowie der Einfallswinkel α geeignet gewählt werden. Insbesondere hat es sich hierbei als günstig erwiesen, die Strahlformungseinheit 4 so auszulegen, dass die Linien-Breite der linienförmigen Beleuchtung auf dem Band 8 veränderbar ist, um zwischen der verhältnismäßig kleinen Linien-Breite von ca. 1 µm für die Streulichtmessung und der verhältnismäßig großen Linien-Breite für die Dickenmessung im Bereich um ca. 100 µm umschalten zu können.

## Patentansprüche

1. Vorrichtung zur Bestimmung eines Verschmutzungsgrads einer durch Partikel (10) verunreinigten Oberfläche (8a) eines entlang einer Vorschubrichtung (X) bewegten Bandes (8), umfassend:
eine Lichterzeugungseinheit (2, 2a bis 2c) zur Erzeugung von Beleuchtungsstrahlung (3),
eine der Lichterzeugungseinheit (2, 2a bis 2c) nachgeordnete Strahlformungseinheit (4) zur Formung mindestens eines streifenförmigen Beleuchtungsstrahls (7) zur linienförmigen Beleuchtung der Oberfläche (8a) des Bandes (8) quer zur Vorschubrichtung (X), wobei die Strahlformungseinheit (4) zur linienförmigen Beleuchtung des Bandes (8) mit veränderlicher Linienbreite ausgebildet ist
eine Detektoreinheit (5, 5a, 5b) zur Detektion von an dem Band (8) gestreuter Beleuchtungsstrahlung (S), sowie
eine Auswerteeinrichtung (6) zur Bestimmung des Verschmutzungsgrads der Oberfläche (8a) anhand der detektierten Beleuchtungsstrahlung (S), wobei die Strahlformungseinheit (4) mindestens eine Teleskopanordnung (T₁, T₂) zur Strahlaufweitung der Beleuchtungsstrahlung (3) in Vorschubrichtung (X) aufweist, und wobei mindestens eines der optischen Elemente (25a) der Teleskopanordnung (T₁, T₂) zur Einstellung der Linienbreite des streifenförmigen Beleuchtungsstrahls (7) auf dem Band (8) eine einstellbare Brennweite (b1) aufweist.

2. Vorrichtung nach Anspruch 1, bei welcher die Lichterzeugungseinheit mindestens eine Lichtquelle (2) zur Erzeugung von Beleuchtungsstrahlung in einem Wellenlängenbereich zwischen 300 nm und 1000 nm aufweist.

3. Vorrichtung nach einem der Ansprüche 1 oder 2, bei welcher die Lichterzeugungseinheit mindestens eine Lichtquelle (2a bis 2c) zur Erzeugung von Beleuchtungsstrahlung (3) bei einer vorgegebenen Wellenlänge (λ_{R}, λ_{G}, λ_{B}) aufweist.

4. Vorrichtung nach Anspruch 3, bei welcher die Lichterzeugungseinrichtung mindestens zwei Lichtquellen (2a bis 2c) zur Erzeugung von Beleuchtungsstrahlung (3) mit unterschiedlichen Wellenlängen (λ_{R}, λ_{G}, λ_{B}) aufweist.

5. Vorrichtung nach einem der vorhergehenden Ansprüche, bei welcher die Detektoreinrichtung mindestens einen spektral auflösenden Detektor (5, 5a, 5b) zur simultanen Detektion der Beleuchtungsstrahlung (R, S, T) bei zwei oder mehr unterschiedlichen Wellenlängen (λ_{R}, λ_{G}, λ_{B}) aufweist.

6. Vorrichtung nach einem der vorhergehenden Ansprüche, bei welcher die Detektoreinrichtung mindestens einen ortsauflösenden Detektor (5, 5a, 5b) zur ortsauflösenden Detektion der Beleuchtungsstrahlung (R, S, T) quer zur Vorschubrichtung (X) aufweist.

7. Vorrichtung nach einem der vorhergehenden Ansprüche, bei welcher ein Einfallswinkel (α) des streifenförmigen Beleuchtungsstrahls (7) auf die Oberfläche (8a) des Bandes (8) einstellbar ist.

8. Vorrichtung nach einem der vorhergehenden Ansprüche, bei welcher ein Detektionswinkel (β) zur Detektion von an dem Band (8) reflektierter, transmittierter und/oder gestreuter Beleuchtungsstrahlung (R, S, T) einstellbar ist.

9. Vorrichtung nach einem der vorhergehenden Ansprüche, bei welcher die Auswerteeinrichtung (6) zur Detektion des Überschreitens eines Grenzwerts des Verschmutzungsgrads und/oder eines Grenzwerts der Änderung des Verschmutzungsgrads der Oberfläche (8a) ausgebildet ist.

10. Vorrichtung nach einem der vorhergehenden Ansprüche, bei welcher die Auswerteeinrichtung (6) zur Bestimmung eines Verschmutzungsgrads der Oberfläche (8a) an mehreren sich jeweils in Vorschubrichtung (X) erstreckenden Bandabschnitten (A) ausgebildet ist.

11. Vorrichtung nach einem der vorhergehenden Ansprüche, weiter umfassend: einen Referenz-Detektor (12) zur Bestimmung der Intensität der von der Lichterzeugungseinheit (2) erzeugten Beleuchtungsstrahlung (3).

## Claims

1. Apparatus for determining a degree of contamination of a surface (8a) of a tape (8) moved along a feed direction (X), said surface being contaminated by particles (10), comprising:
a light generating unit (2, 2a to 2c) for generating illumination radiation (3),
a beam shaping unit (4) disposed downstream of the light generating unit (2, 2a to 2c) and serving for shaping at least one stripe-shaped illumination beam (7) for linearly illuminating the surface (8a) of the tape (8) transversely with respect to the feed direction (X), the beam shaping unit (4) being embodied for linearly illuminating the tape (8) with a variable line width,
a detector unit (5, 5a, 5b) for detecting illumination radiation (S) scattered at the tape (8), and
an evaluation device (6) for determining the degree of contamination of the surface (8a) on the basis of the detected illumination radiation (S),
wherein the beam shaping unit (4) has at least one telescope arrangement (T₁, T₂) for the beam expansion of the illumination radiation (3) in the feed direction (X) and wherein at least one of the optical elements (25a) of the telescope arrangement (T₁, T₂) has an adjustable focal length (b1) for the purposes of setting the line width of the stripe-shaped illumination beam (7) on the tape (8).

2. Apparatus according to Claim 1, wherein the light generating unit has at least one light source (2) for generating illumination radiation in a wavelength range of between 300 nm and 1000 nm.

3. Apparatus according to either of Claims 1 and 2, wherein the light generating unit has at least one light source (2a to 2c) for generating illumination radiation (3) at a predefined wavelength (λ_{R}, λ_{G}, λ_{B}).

4. Apparatus according to Claim 3, wherein the light generating device has at least two light sources (2a to 2c) for generating illumination radiation (3) having different wavelengths (λ_{R}, λ_{G}, λ_{B}).

5. Apparatus according to any one of the preceding claims, wherein the detector device has at least one spectrally resolving detector (5, 5a, 5b) for simultaneously detecting the illumination radiation (R, S, T) at two or more different wavelengths (λ_{R}, λ_{G}, λ_{B}).

6. Apparatus according to any one of the preceding claims, wherein the detector device has at least one spatially resolving detector (5, 5a, 5b) for the spatially resolving detection of the illumination radiation (R, S, T) transversely with respect to the feed direction (X).

7. Apparatus according to any one of the preceding claims, wherein an angle of incidence (α) of the stripe-shaped illumination beam (7) on the surface (8a) of the tape (8) is adjustable.

8. Apparatus according to any one of the preceding claims, wherein a detection angle (β) for detecting illumination radiation (R, S, T) reflected, transmitted and/or scattered at the tape (8) is adjustable.

9. Apparatus according to any one of the preceding claims, wherein the evaluation device (6) is embodied to detect the overshooting of a limit value of the degree of contamination and/or a limit value of the change in the degree of contamination of the surface (8a).

10. Apparatus according to any one of the preceding claims, wherein the evaluation device (6) is embodied to determine a degree of contamination of the surface (8a) on a plurality of tape sections (A) extending in the feed direction (X).

11. Apparatus according to any one of the preceding claims, further comprising: a reference detector (12) for determining the intensity of the illumination radiation (3) generated by the light generating unit (2).

## Revendications

1. Dispositif de détermination du degré d'encrassement d'une surface (8a), polluée par des particules (10), d'une bande (8) se déplaçant dans une direction d'avancement (X), ledit dispositif comprenant :
une unité de génération de lumière (2, 2a à 2c) destinée à générer un rayonnement d'éclairage (3),
une unité de mise en forme de faisceau (4) disposée en aval de l'unité de génération de lumière (2, 2a à 2c) et destinée à mettre en forme au moins un faisceau d'éclairage (7) en forme de bande pour éclairer linéairement la surface (8a) de la bande (8) transversalement à la direction d'avancement (X), l'unité de mise en forme de faisceau (4) étant conçue pour éclairer linéairement la bande (8) avec une largeur de ligne variable,
une unité de détection (5, 5a, 5b) destinée à détecter le rayonnement d'éclairage (S) diffusé sur la bande (8), et
une unité d'évaluation (6) destinée à déterminer le degré d'encrassement de la surface (8a) sur la base du rayonnement d'éclairage détecté (S),
l'unité de mise en forme de faisceau (4) comportant au moins un ensemble télescopique (T₁, T₂) destiné à étaler le faisceau du rayonnement d'éclairage (3) dans la direction d'avancement (X), et l'un au moins des éléments optiques (25a) de l'ensemble télescopique (T₁, T₂) ayant une distance focale réglable (b1) pour régler la largeur de ligne du faisceau d'éclairage (7) en forme de bande sur la bande (8).

2. Dispositif selon la revendication 1, dans lequel l'unité de génération de lumière comporte au moins une source de lumière (2) destinée à générer un rayonnement d'éclairage dans une gamme de longueurs d'onde comprise entre 300 nm et 1000 nm.

3. Dispositif selon l'une des revendications 1 et 2, dans lequel l'unité de génération de lumière comporte au moins une source de lumière (2a à 2c) destinée à générer un rayonnement d'éclairage (3) à une longueur d'onde prédéterminée (R, G, B).

4. Appareil selon la revendication 3, l'unité de génération de lumière comportant au moins deux sources de lumière (2a à 2c) destinées à générer un rayonnement d'éclairage (3) de différentes longueurs d'onde (_{R}, _{G}, _{B}).

5. Dispositif selon l'une des revendications précédentes, l'unité de détection comportant au moins un détecteur à résolution spectrale (5, 5a, 5b) destiné à la détection simultanée du rayonnement d'éclairage (R, S, T) à deux longueurs d'onde différentes (_{R}, _{G}, _{B}) ou plus.

6. Dispositif selon l'une des revendications précédentes, dans lequel l'unité de détection comporte au moins un détecteur à résolution locale (5, 5a, 5b) destiné à la détection à résolution locale du rayonnement d'éclairage (R, S, T) transversalement à la direction d'avancement (X).

7. Dispositif selon l'une des revendications précédentes, dans lequel un angle d'incidence (α) du faisceau d'éclairage (7) en forme de bande à la surface (8a) de la bande (8) est réglable.

8. Dispositif selon l'une des revendications précédentes, dans lequel un angle de détection (β) destiné à la détection du rayonnement d'éclairage (R, S, T) réfléchi, transmis et/ou diffusé au niveau de la bande (8) est réglable.

9. Dispositif selon l'une des revendications précédentes, dans lequel l'unité d'évaluation (6) est conçue pour détecter qu'une valeur limite du degré d'encrassement et/ou une valeur limite de la variation du degré d'encrassement de la surface (8a) est dépassée.

10. Dispositif selon l'une des revendications précédentes, dans lequel l'unité d'évaluation (6) est conçue pour déterminer un degré d'encrassement de la surface (8a) sur plusieurs portions de bande (A) s'étendant chacune dans la direction d'avancement (X).

11. Dispositif selon l'une des revendications précédentes, comprenant en outre : un détecteur de référence (12) destiné à déterminer l'intensité du rayonnement d'éclairage (3) généré par l'unité de génération de lumière (2).
